# EUROPEAN PATENT APPLICATION

(11) **EP 1 916 551 A1**
(43) Date of publication of application: **30.04.2008**
(21) Application number: 07254192.3
(22) Date of filing: 23.10.2007
(51) Int. Cl.: G02B 6/00

(54) **Prism matrix with random phase structures**

(30) Priority: 26.10.2006 US 553222
(71) Applicant: K Laser Technology, Inc., Taiwan (TW)
(72) Inventor: Lee, Wai-hon, Los Altos, CA 94024 (US)
(74) Representative: Cross, Rupert Edward Blount

(57) **Abstract**

An improvement to prism films for displays that reduces the Moiré pattern effect, and also provides a light diffusion function. A prism film with many small prism units is used. The pattern of the prism film is varied, ideally with a random or pseudo random variation. The variation can be in any, some or all aspects of the prism structure. In particular, the thickness and position of the prism elements can be varied.

## Description

### CROSS-REFERENCES TO RELATED APPLICATIONS

NOT APPLICABLE

### BACKGROUND OF THE INVENTION

The present invention relates to prismatic films used for illumination, and in particular for such films used in computer liquid crystal displays (LCD).

Prism film has been proposed for controlling the illumination of architectural light fixtures for many decades. In recent years, with the invention of LCD monitors, prismatic film became an important part of the light source for illuminating the LCD. Its primary function is to concentrate the angle of illumination from the backlight to within the desired viewing angles. When a LCD is used in a notebook computer, the light source is normally installed at the edge of the display to reduce its thickness. In this case, the prismatic film also helps to redirect the off-axis illumination to a direction normal to the display surface.

Whitehead's U.S. patent 4,542,449 illustrates such a prismatic film. There are many variations of prismatic film. One of the recent patents (U.S. Patent 6,091,547) covering prismatic film is issued to Mark Gardiner et.al. This patent is similar to Whitehead's patent except that it specifically describes that the period of the prism is less than 30µm and the apex angle of the prism is between 45 and 135 degrees.

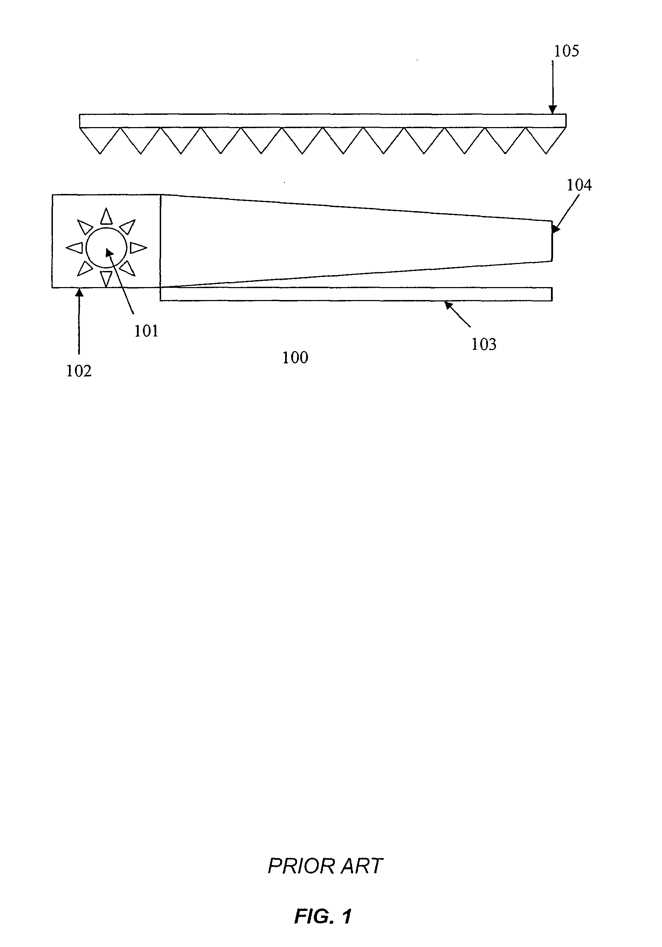

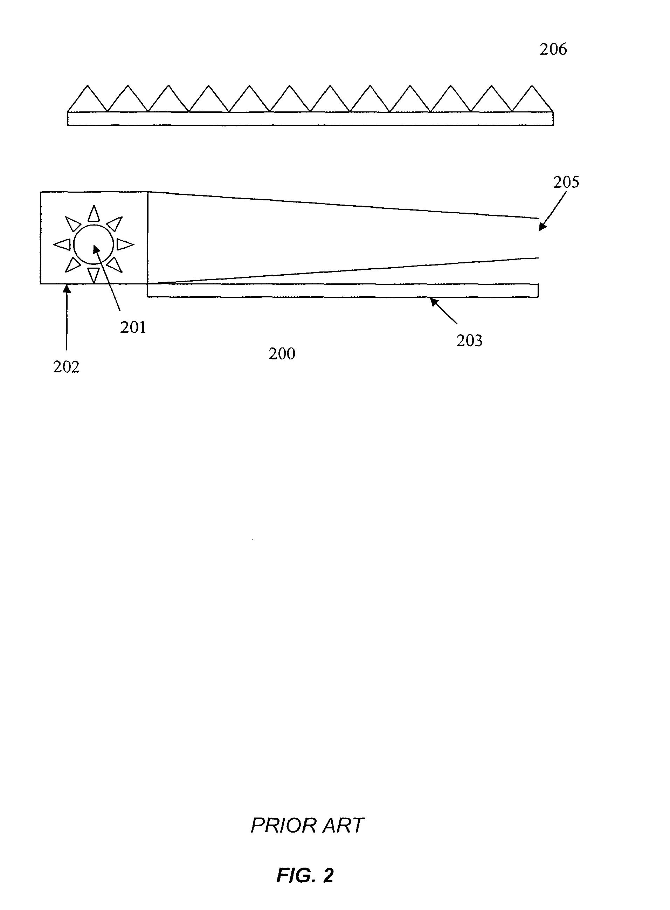

Figures 1 and 2 illustrate the use of prismatic film in two typical prior art light source configurations for a notebook computer. Figure 1 shows a light source 101 enclosed in a reflective structure 102. Part of the light from the source is guided by a light guide 104 and propagates upwards to the prism film 105. Light propagating downward will be reflected by a reflective surface 103. In this configuration the prism faces down. In Figure 2 the prism structure faces up. In both configurations the function of the prism film is to redirect the light to be normal to the surface of the LCD.

One problem with many prior art prism films is that the redirected light forms a Moiré pattern - an undesired aliasing effect caused by an interference pattern. It produces noticeable dark and light bands on the monitor.

Pat. 6,862,141 shows an optical surface substrate which has a worm-like and continuous 3D structure. The 3D surface is a result of a first surface structure function being modulated by a second surface function. The second surface function is random while the first surface function is deterministic. The resulting three-dimensional surface of the substrate retains the light turning characteristics of the first surface structure function, but also diffuses light to, for example, reduce Moire artifacts.

### BRIEF SUMMARY OF THE INVENTION

The present invention provides an improvement to prism films for displays that reduces the Moiré pattern effect, and also provides a light diffusion function. A prism film with many small prism units is used. The pattern of the prism film is varied, ideally with a random or pseudo random variation. The variation can be in any, some or all aspects of the prism structure. In particular, the thickness and position of the prism elements can be varied.

In one embodiment, the prism is broken into multiple rows, with the rows being offset to provide a varying pattern. In particular, the offset of the rows can be a random or pseudo random variation. This provides a structure which provides the desired light diffusion, yet has a regular aspect making it easier and less expensive to manufacture.

In another embodiment, the prism is made of multiple triangular ridges, and the height and/or location of the apex is varied from one prism unit to the next.

### BRIEF DESCRIPTION OF THE DRAWINGS

Figure 1 is a side, cut away diagram of a prior art backlight structure for a LCD with a prism facing towards the light source.

Figure 2 shows the prior art backlight structure of Figure 1 with the prism facing away from the light source.

Figure 3 is a top view of one embodiment of the prism structure according to the present invention showing randomly offset prism rows.

Figure 4 is a side view of one unit of the prism structure of Figure 3.

Figure 5 is a diagram illustrating the manufacture of a prism structure according to an embodiment of the present invention.

Figure 6 is a diagram of a side view of an embodiment of a prism structure resulting from the manufacturing method illustrated in Figure 5.

### DETAILED DESCRIPTION OF THE INVENTION

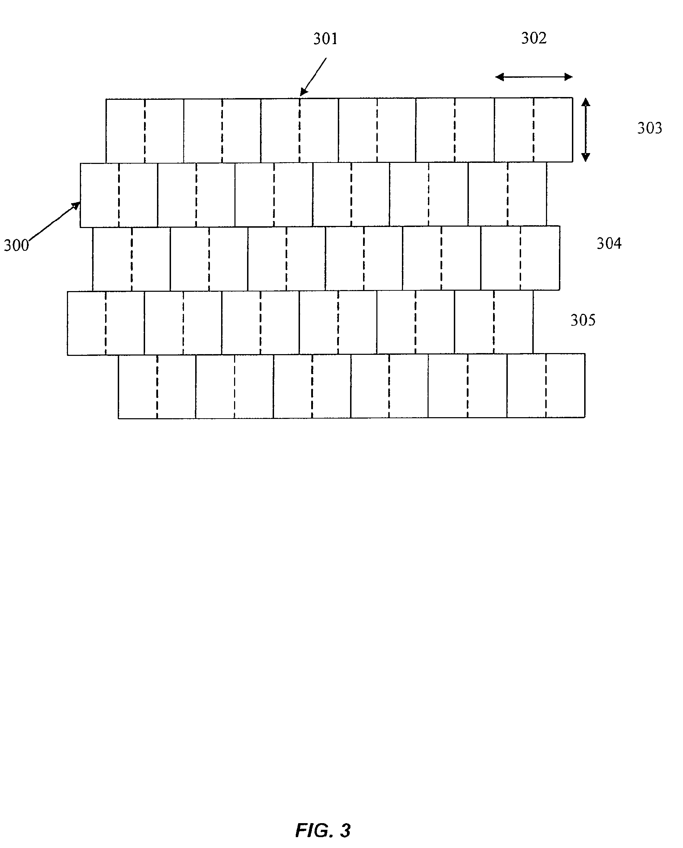

Figure 3 is a top view of a prism film according to an embodiment of the present invention. Rectangular block 300 is a prism unit. The dotted lines, such as dotted line 301, indicate the apexes of the prism structure. Each prism has a length and width, such as length 302 and width 303 as illustrated for one prism in the first row. In one embodiment, the length of the prism is at least twice the width of the prism. In one embodiment, the width of each prism is less than 50µm.

The apex 301 as shown is in the center of a prism for a symmetric prism. However, a prism can be asymmetric with the apex off to one side of the center of the prism. The apexes of the prisms in row 304 and the apexes of the prisms in row 305 are shifted with respect to each other. In fact, the apex of each row is randomly shifted with respect to one another. This random or pseudo random shifting of the rows provides the desired diffusion effect. At the same time, each row has a regular structure, making manufacture more practical.

In one embodiment, the height of the apexes of the prisms is varied randomly or pseudo randomly. In one embodiment, the height of the prisms in the matrix is randomly chosen in such a way that the apex angles are between 90 and 135 degrees.

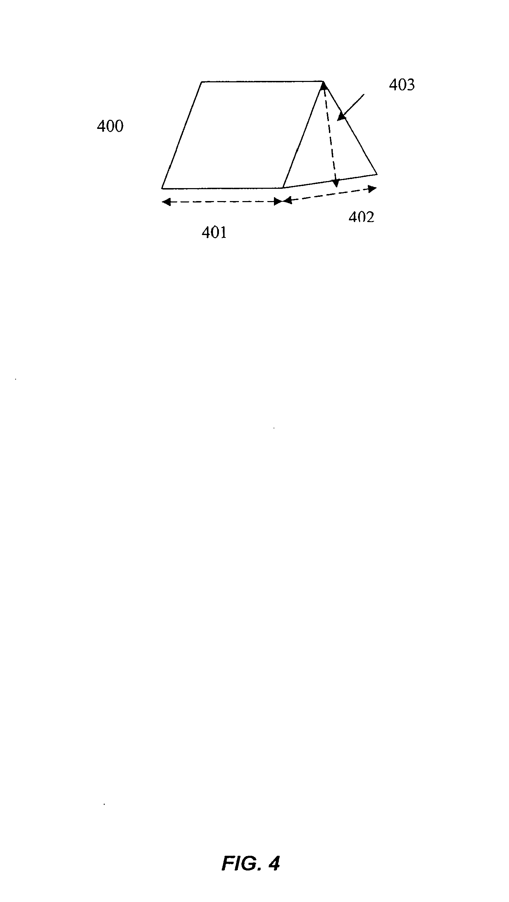

Figure 4 shows a unit of the prism 400 which is defined by its length 401, width 402 and height 403. Length 401 and width 402 correspond to length 302 and width 303 of figure 3. In one embodiment, the construction of the prism provides for equal lengths and widths, but the height 403 of each prism is different. This provides another dimension to the desired diffusion effect provided.

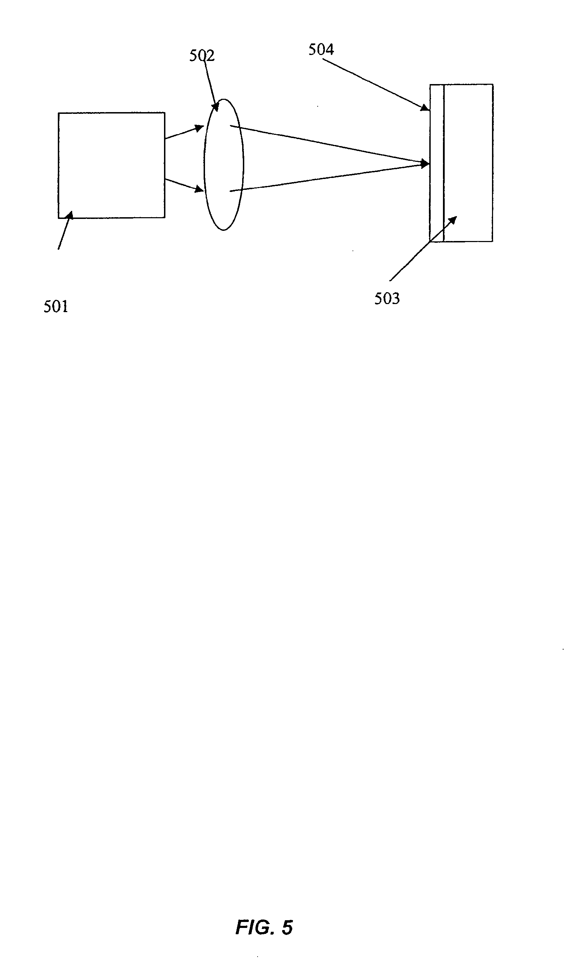

The method of fabricating this prismatic structure is shown in Figure 5. Optical system 501 is used to shape the intensity profile of the laser beam to a triangular shape. In other words, the intensity of the laser is at zero where the valleys are desired, at its peak where apexes are desired, and varies in between. The laser develops, and thus hardens, the photoresist in varying amounts, giving the desired triangular prism structure. Later etching will go deepest where there is no photoresist. This profile is imaged by lens 502 to a plate 503 coated with a layer of photoresist 504. The plate 503 is mounted on an x-y translation table.

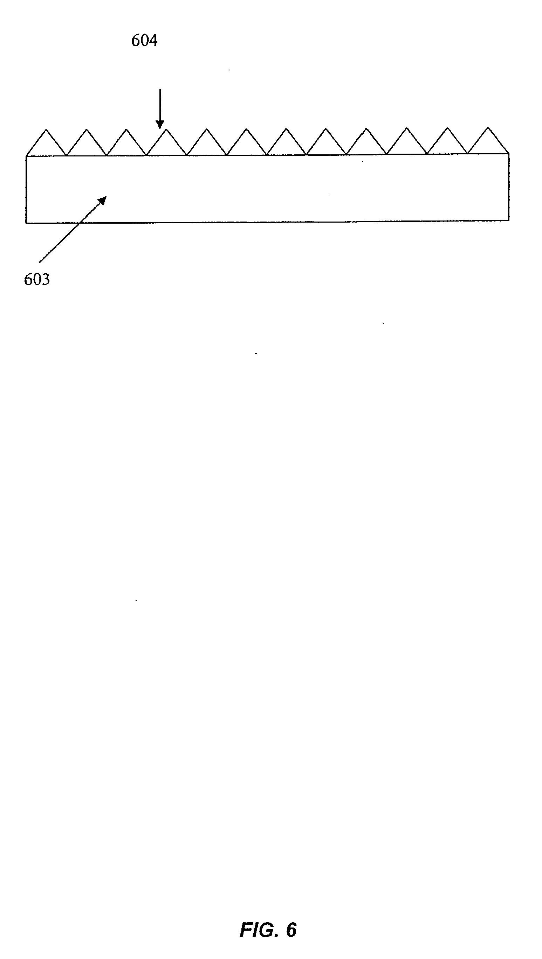

After exposure and development a surface structure as shown in Figure 6 is formed. Developed photoresist 604 has a triangular shape, so that subsequent etching will go deepest at the valleys (for negative photoresist), and won't etch at the peaks, giving a triangular shape to the top of substrate 603 that is the inverse of the photoresist pattern (the opposite is true for positive photoresist). The use of optical beam to shape the photoresist layer allows the random placement of the triangular structure on the recording surface. A pseudo random number generator can be used by a program to set the peak heights and row offsets, which are then feed to the controller for moving the x-y translation table.

The use of triangular or pyramidal shapes allows the surface to be more easily programmed to not only provide the diffusion desired, but to achieve the prime purpose of reflecting light, entering from the edges, outward orthogonally, within a desired range of view to concentrate the brightness.

In one embodiment, the substrate is a transparent material, such as a dielectric sheet. The substrate can be the film which is then placed over a lightguide, or could be the lightguide itself. In one embodiment, the substrate (film) is polymer material such as acrylic or polyester.

As will be understood by those of skill in the art, the present invention could be embodied in other specific forms without departing from the essential characteristics thereof. For example, instead of prisms with straight edges, a curved side could be provided, with the curve extending from the apex to the base. Accordingly the foregoing description is intended to be illustrative, but not limiting, of the scope of the invention which is set forth in the following claims.

## Claims

1. A prismatic film for both concentrating the angle of illumination and diffusing the light for an LCD lightguide, comprising:
a transparent film having an array of small prisms on a surface thereof;
at least one aspect of said prism structure varying in a random or pseudo random manner.

2. The prismatic film of claim 1 wherein the apexes of said prisms vary in height in a random or pseudo random manner.

3. The prismatic film of claim 1 or claim 2, wherein the apexes of the prism are spaced at equal distances in one direction and are shifted randomly or pseudo randomly in a second direction normal to the first direction.

4. The prismatic film of any preceding claim, wherein the height of the prisms in the matrix is randomly or pseudo randomly chosen in such a way that the apex angles are between 90 and 135 degrees.

5. The prismatic film of any preceding claim, wherein the width of each prism is less than 50µm.

6. The prismatic film of any preceding claim, wherein the length of the prism is at least twice the width of the prism.

7. A prismatic film for an LCD lightguide, comprising:
a transparent film having an array of small prisms on a surface thereof;
the apexes of the prism are spaced at equal distances in one direction and are shifted randomly or pseudo randomly in a second direction normal to the first direction.

8. The prismatic film of claim 7, wherein the height of the prisms in the matrix is randomly or pseudo randomly chosen in such a way that the apex angles are between 90 and 135 degrees.

9. The prismatic film of claim 7 or claim 8, wherein the width of each prism is less than 50µm.

10. The prismatic film of claim 7, 8 or 9 wherein the length of the prism is at least twice the width of the prism.
